# EUROPEAN PATENT SPECIFICATION

(11) **EP 4 430 937 B1**
(45) Date of publication and mention of the grant of the patent: **24.12.2025**
(21) Application number: 24162987.2
(22) Date of filing: 12.03.2024
(51) Int. Cl.: A01B 63/10, A01B 59/06

(54) **WORKING MACHINE AND METHOD OF CONTROLLING A WORKING MACHINE**
ARBEITSMASCHINE UND VERFAHREN ZUR STEUERUNG EINER ARBEITSMASCHINE
MACHINE DE TRAVAIL ET PROCÉDÉ DE COMMANDE D'UNE MACHINE DE TRAVAIL

(30) Priority: 13.03.2023 JP 2023038679
(43) Date of publication of application: 18.09.2024
(73) Proprietor: KUBOTA CORPORATION, Osaka-shi, Osaka 556-8601 (JP)
(72) Inventor: OHARA, Shinji, OSAKA, 5900908 (JP); HORAI, Kohei, OSAKA, 5900908 (JP); KUROSHITA, Yoshihiko, OSAKA, 5900908 (JP)
(74) Representative: Cabinet Beau de Loménie

(56) References cited:
- EP-A1- 4 427 562
- JP-A- 2002 223 605
- JP-A- H04 210 502
- JP-A- H09 184 501

## Description

### BACKGROUND OF THE INVENTION

### Field of the Invention

The present invention relates to a working machine such as a tractor and a method of controlling a working machine.

### Description of the Related Art

A lifting device of a working vehicle disclosed in Japanese Unexamined Patent Application Publication No. 2014-212710 (PTL 1) raises and lowers a working machine that is coupled to a traveling machine body by causing a hydraulic cylinder to extend and retract, and includes the hydraulic cylinder that extends and retracts to raise and lower the working machine, a solenoid valve that controls raising and lowering of the working machine using the hydraulic cylinder, a detector that detects the height of the working machine, and a controller that controls lowering of the working machine by controlling current supply to the solenoid valve. The controller increases the duty ratio or the current value of current that is supplied to the solenoid valve as the difference between the target height and the height of a rotary cultivator increases and reduces the duty ratio or the current value of the current that is supplied to the solenoid valve as the difference from the height of the rotary cultivator decreases.
JP H09 184501 A, JP H04 210502 A and JP 2002 223605 A disclose other examples of lifting devices for working machines.

### SUMMARY OF THE INVENTION

With the lifting device of the working vehicle in PTL 1, shock that occurs when the rotary cultivator is raised or lowered is reduced, and raising/lowering work is smoothly carried out.

In some cases, however, it is difficult, with the control regarding the lifting device of the working vehicle in PTL 1 alone, to achieve both the reduction in shock that would occur when the rotary cultivator is raised or lowered and the efficiency of work.

The present invention has been made to solve the issues of the existing technique, and it is an object of the present invention to provide a working machine and a method of controlling a working machine each of which reduces shock when a driven member is lowered to reach the target position and also improves efficiency.

A working machine according to an aspect of the present invention is defined in claim 1 and includes a drive device including a hydraulic actuator to be actuated by hydraulic fluid and a driven member to be raised and lowered by the hydraulic actuator, a control valve to control the hydraulic actuator, and a controller configured or programmed to control the control valve to cause the driven member to move to a target position, wherein the controller is configured or programmed to switch between a first mode and a second mode, the first mode being a mode in which the controller controls the control valve by performing a first control based on a target flow rate of hydraulic fluid to actuate the hydraulic actuator and a deviation of an actual position of the driven member from a target value, the second mode being a mode in which the controller controls the control valve by performing a second control including controlling the target flow rate to be lower than the first control when the deviation is more than zero and less than a predetermined deviation.

The controller may be configured or programmed to control the control valve by performing the first control when the driven member is raised even in a case that the controller is in the second mode.

The working machine further includes a switch to be operated to perform switching between the first mode and the second mode of the controller. The controller is configured or programmed to switch between the first mode and the second mode in response to an operation of the switch.

The working machine may further include a manual operator to change a maximum flow rate of hydraulic fluid to actuate the hydraulic actuator. The controller may be configured or programmed to control the control valve based on the maximum flow rate changed via the manual operator.

The drive device may be a lifting device to raise and lower a working device. The hydraulic actuator may be a lift cylinder. The driven member may be a lift arm to be driven by actuating the lift cylinder.

The controller may be configured or programmed to control the control valve by performing the second control when the driven member is lowered in a case that the controller is in the second mode.

A method of controlling a working machine according to an aspect of the present invention is a method of controlling a working machine as defined in claim 6, which includes a drive device including a hydraulic actuator to be actuated by hydraulic fluid and a driven member to be raised and lowered by the hydraulic actuator, a control valve to control the hydraulic actuator, and a controller to control the control valve to cause the driven member to move to a target position, the method including causing the controller to switch between a first mode and a second mode, the first mode being a mode in which the controller controls the control valve by performing a first control based on a target flow rate of hydraulic fluid to actuate the hydraulic actuator and a deviation of an actual position of the driven member from a target value, the second mode being a mode in which the controller controls the control valve by performing a second control including controlling the target flow rate to be lower than the first control when the deviation is more than zero and less than a predetermined deviation.

A working machine and a method of controlling a working machine described above make it possible to reduce shock when a driven member is lowered to reach the target position and also improve efficiency.

The above and other elements, features, steps, characteristics and advantages of the present invention will become more apparent from the following detailed description of the preferred embodiments with reference to the attached drawings.

### BRIEF DESCRIPTION OF THE DRAWINGS

A more complete appreciation of preferred embodiments of the present invention and many of the attendant advantages thereof will be readily obtained as the same becomes better understood by reference to the following detailed description when considered in connection with the accompanying drawings described below.
FIG. 1 is a side view of a working machine.
FIG. 2 illustrates a control system of a working machine.
FIG. 3 is a rear-left perspective view of a lifting device.
FIG. 4 is a left side view illustrating raising/lowering operation of a lifting device.
FIG. 5 illustrates an example of a first control graph.
FIG. 6 illustrates an example of a third control graph.
FIG. 7 illustrates a comparison between a first control graph and a second control graph.
FIG. 8 illustrates an example of a switch.
FIG. 9 illustrates a variation of a second control graph.
FIG. 10 illustrates an example of a corrected third control graph.
FIG. 11 illustrates the flow of steps in a first mode and a second mode performed by a controller.
FIG. 12 illustrates a first control graph and a second control graph according to a variation.

### DESCRIPTION OF THE PREFERRED EMBODIMENTS

The preferred embodiments will now be described with reference to the accompanying drawings, wherein like reference numerals designate corresponding or identical elements throughout the various drawings. The drawings are to be viewed in an orientation in which the reference numerals are viewed correctly.

Embodiments of the present invention will hereinafter be described with reference to the drawings.

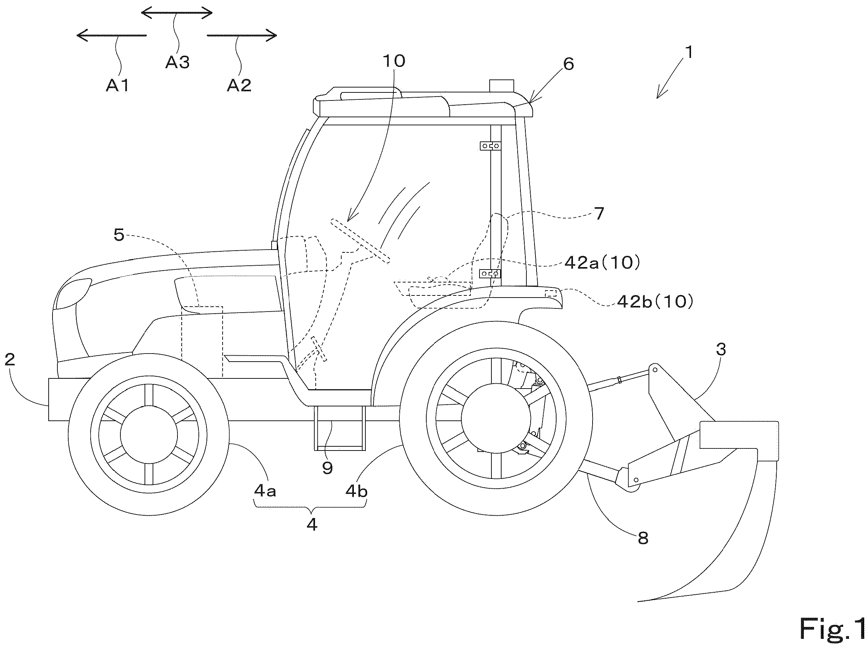

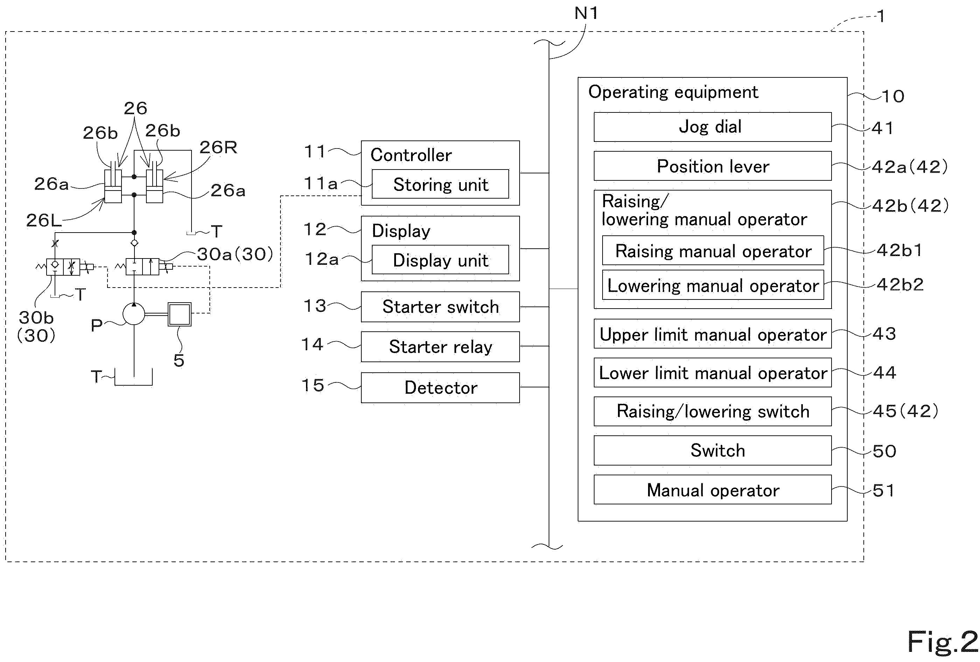

A working machine 1 will now be described with reference to FIGS. 1 and 2. FIG. 1 is a side view of the working machine 1 according to the present embodiment. FIG. 2 illustrates a control system that is included in the working machine 1. As illustrated in FIG. 1, the working machine 1 includes a machine body 2, a working device 3, a traveling device 4, a prime mover 5, a protection structure 6, and a drive device 8.

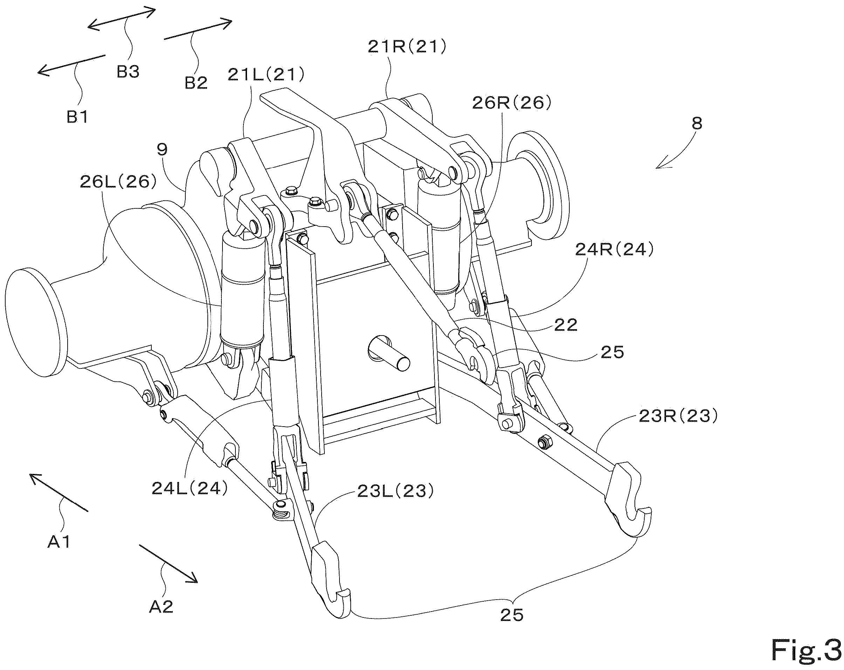

According to one or more embodiments of the present invention, the direction (the direction of arrow A1 in FIG. 1) in which a driver who sits on an operator's seat 7 of the working machine 1 faces is referred to as a forward direction, and the direction (the direction of arrow A2 in FIG. 1) opposite to the forward direction is referred to as a rearward direction. The rightward direction (the direction of arrow B2 in FIG. 3) from the driver is referred to as a rightward direction, and the leftward direction (the direction of arrow B1 in FIG. 3) from the driver is referred to as a leftward direction. A horizontal direction (the direction of arrow B3 in FIG. 3) perpendicular to the front-rear direction (the direction of arrow A3 in FIG. 1) of the working machine 1 is referred to as a vehicle body width direction (or a width direction).

The working device 3 is, for example, an implement, is coupled to a rear portion of the machine body 2, and can carry out various kinds of work. The type of working device 3 is not particularly limited, and examples thereof include a digger that digs potatoes or carrots, spreaders such as a fertilizer spreader (fertilizer applicator) that spreads fertilizer and an agricultural chemical spreader that spreads agricultural chemicals, a seeder that sows seeds in an agricultural field, a harvester for harvest, a mower for mowing, for example, grass, a tedder for tedding, for example, grass, a rake for raking, for example, grass, a baler for baling, for example, grass, and a ground implement to perform work on an agricultural field. FIG. 1 illustrates an example in which a plow as the working device 3 is coupled to the rear portion of the machine body 2.

The traveling device 4 applies propelling force to the machine body 2. In the example illustrated in FIG. 1, the traveling device 4 is a wheeled device that includes at least one front wheel 4a and at least one rear wheel 4b but may be a crawler device.

The drive device (lifting device) 8 can couple the working device 3 to the machine body 2 and can raise and lower the working device 3 with respect to the machine body 2. The lifting device 8 is provided at the rear portion of the machine body 2. For example, the lifting device 8 includes a three-point linkage and/or the like. The working device 3 is attachable to and detachable from the lifting device 8. The working device 3 is coupled to the lifting device 8, and therefore the machine body 2 can move the working device 3.

Examples of the prime mover 5 include a diesel engine and an electric motor. In the present embodiment, the prime mover 5 includes a diesel engine. A flywheel housing is provided at a rear portion of the prime mover 5. Power that is outputted by the prime mover 5 is transmitted to a transmission case 9 located at a lower portion of the machine body 2.

As illustrated in FIG. 1, the working machine 1 includes operating equipment 10 and the operator's seat 7 that is provided at an upper portion of the machine body 2. The operator's seat 7 is provided inside the protection structure (such as a cabin or a canopy) 6. The operating equipment 10 is provided in the vicinity of, for example, the operator's seat 7, and includes a collection of device(s), member(s), and so on related to operations, performed by a operator who sits on the operator's seat 7, of machine(s), device(s), equipment, and member(s) (such as the working device 3, the traveling device 4, and the prime mover 5) included in the working machine 1. The operating equipment 10 includes steering that at least includes, for example, a steering wheel.

As illustrated in FIG. 2, devices included in the working machine 1 are connected together via an in-vehicle network N1 such as CAN, ISOBUS, LIN, or FlexRay. Examples of the devices connected to the in-vehicle network N1 include the prime mover 5, the operating equipment 10, a controller 11, a display 12, a starter switch 13, and a starter relay 14.

The display 12 includes a display unit 12a such as a liquid crystal display and displays various information about the working machine 1 on the display unit 12a. The display 12 is provided at a location in the vicinity of the operator's seat 7 (such as a position forward of the operator's seat 7 or rearward of the operator's seat 7). In the present embodiment, the display 12 is a monitor (dashboard monitor) provided in a meter panel located forward of the operator's seat 7.

The display 12 is operated using a jog dial 41 included in the operating equipment 10. The jog dial 41 is operated by being rotated. The jog dial 41 is rotated to change the candidate to be selected from options displayed on the display unit 12a. The jog dial 41 can be operated by being pressed, and the selection of an option is confirmed by pressing the jog dial 41.

The controller 11 includes ECU(s) (electronic controller(s)) and includes CPU(s), volatile memory(memories), nonvolatile memory(memories), other electronic component(s), electric circuit(s), and/or the like. The nonvolatile memory of the controller 11 stores software program(s) and various data for the CPU(s) to control components. That is, the controller 11 controls the working machine 1.

The controller 11 performs various kinds of control relating to the working machine 1. For example, the controller 11 operates the working device 3, the traveling device 4, the prime mover 5, and so on, based on signals (operation signals) inputted from the operating equipment 10. As illustrated in FIG. 2, the controller 11 includes a storing unit (storage and/or memory) 11a. The storing unit 11a is a storing device that stores various information, such as a nonvolatile memory. For example, the storing unit 11a stores various kinds of application software. The storing unit 11a may be a storing device such as a hard disk drive (HDD) or a solid-state drive (SSD) that is provided outside the controller 11 and that is connected to the in-vehicle network N1.

The starter switch 13 starts the prime mover 5. The operator inserts an engine key into a key cylinder in the vicinity of the operator's seat and rotates the engine key, so that the starter switch 13 outputs a signal (start signal) to start the prime mover to the starter relay 14.

The starter relay 14 is a component to start the prime mover 5. Upon receipt of the start signal, the starter relay 14 starts the prime mover 5. Note that starting the prime mover, which is a kind of driving of the prime mover, is not limited to a mechanical method (key cylinder method) by which the engine key is inserted into the key cylinder, to turn on the starter relay 14, but may be a smart entry method by which the start of the prime mover is permitted or prohibited via wireless communication.

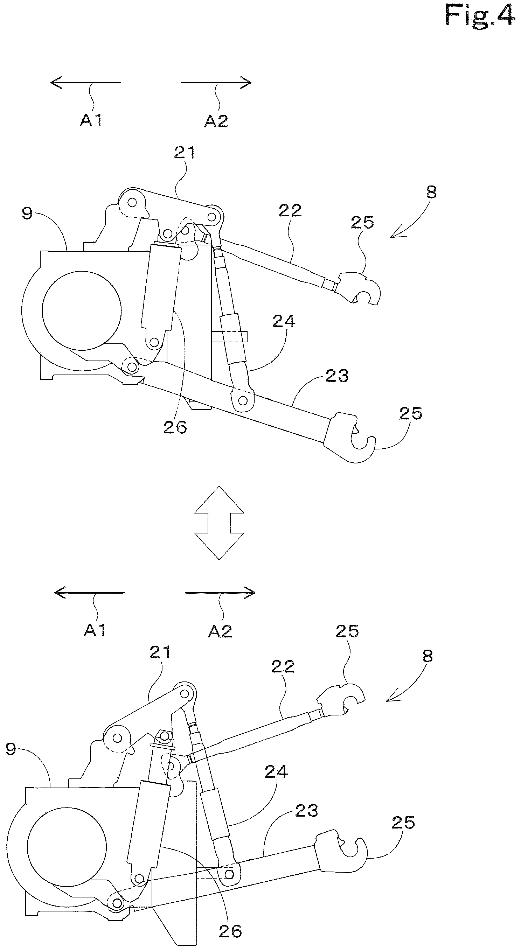

The lifting device 8 will now be described in detail. As illustrated in FIGS. 3 and 4, the lifting device 8 is connected to the transmission case 9. FIG. 3 is a rear left perspective view of the lifting device 8. FIG. 4 is a left side view illustrating raising/lowering operation of the lifting device 8. As illustrated in FIGS. 3 and 4, the lifting device 8 includes lift arm(s) (driven member(s)) 21, a top link 22, lower link(s) 23, lift rod(s) 24, and lift cylinder(s) (hydraulic actuator(s)) 26.

As illustrated in FIG. 3, the lift arm(s) 21 includes a first lift arm 21L and a second lift arm 21R. The first lift arm 21L is provided on of opposite sides in the machine body width direction (on the left side). The second lift arm 21R is provided on the other of the opposite sides in the machine body width direction (on the right side). The first lift arm 21L and the second lift arm 21R are provided swingably on the machine body 2. Specifically, the first lift arm 21L and the second lift arm 21R have front end portions pivotably supported on an upper portion of the transmission case 9 and extend in the rearward direction.

The top link 22 is provided between the first lift arm 21L and the second lift arm 21R, and a front end portion is pivotally supported on the upper portion of the transmission case 9. The lower link(s) 23 includes a first lower link 23L and a second lower link 23R. Front end portions of the first lower link 23L and the second lower link 23R are pivotally supported on a lower portion of the transmission case 9. The lift rod(s) 24 includes a first lift rod 24L and a second lift rod 24R. The first lift rod 24L, has an upper end portion connected to a rear end portion of the first lift arm 21L, and a lower end portion connected to an intermediate portion of the first lower link 23L in the length direction. The second lift rod 24R has an upper end portion connected to a rear end portion of the second lift arm 21R, and a lower end portion connected to an intermediate portion of the second lower link 23R in the length direction.

As illustrated in FIGS. 3 and 4, joints 25 configured to attach the working device 3 are provided at a rear end portion of the top link 22 and rear end portions of the lower link 23. The working device 3 is linked to the rear end portion of the top link 22 and the rear end portions of the lower link 23, so that the working device 3 is coupled to a rear portion of the working machine 1 such that the working device 3 can be raised and lowered. Thus, the working device 3 is coupled to the lift arm 21 via the lift rod 24 and the lower links 23.

As illustrated in FIGS. 3 and 4, each lift cylinder 26 is a hydraulic actuator (hydraulic cylinder) to be actuated by hydraulic fluid. As illustrated in FIG. 2, the lift cylinder 26 is a single-acting cylinder and includes a tubular cylinder tube 26a and a piston rod 26b having an end portion thereof slidably inserted in the cylinder tube 26a. The inner space of the cylinder tube 26a is divided into a bottom fluid chamber and a rod fluid chamber by a piston contained movably in a direction of the axis of the cylinder tube 26a (axial direction). Thus, when hydraulic fluid is supplied to the bottom fluid chamber, the lift cylinder 26 extends. When hydraulic fluid is discharged from the bottom fluid chamber, the lift cylinder 26 retracts.

The lift cylinders 26 include a first lift cylinder 26L and a second lift cylinder 26R. The first lift cylinder 26L has an end portion connected to the first lift arm 21L, and another end portion connected to a lower left portion of the transmission case 9. The second lift cylinder 26R had an end portion connected to the second lift arm 21R, and another end portion connected to a lower right portion of the transmission case 9. When the lift cylinders 26 are driven, the first lift arm 21L and the second lift arm 21R swing in an up-and-down direction.

Note that the drive device 8 is not limited to the lifting device 8, provided that the drive device 8 includes the hydraulic actuator 26 to be actuated by hydraulic fluid and the driven member 21 raised and lowered by the hydraulic actuator 26 being driven.

As illustrated in FIG. 2, the working machine 1 includes a hydraulic pump P and control valve(s) 30. The hydraulic pump P is actuated by power produced by the prime mover 5. The hydraulic pump P delivers hydraulic fluid stored in a hydraulic fluid tank T. The hydraulic pump P includes a fixed displacement gear pump or a variable displacement hydraulic pump that includes a pump displacement control mechanism such as a swash plate.

The control valve(s) 30 controls the hydraulic actuator(s) 26. Each control valve 30 is energized by control current outputted from the controller 11 to change the opening. With this, the control valve 30 is capable of adjusting hydraulic fluid to actuate the lift cylinder 26. An example of the control valve 30 is a proportional flow control solenoid valve. The flow rate of hydraulic fluid supplied to the hydraulic actuator 26 increases as the current value I of the control current outputted from the controller 11 increases.

In the present embodiment, the control valve(s) 30 includes a first control valve (raising control valve) 30a to control the extension of the lift cylinder 26 and a second control valve (lowering control valve) 30b to control the retraction of the lift cylinder 26. The first control valve 30a and the second control valve 30b are connected to both the first lift arm 21L and the second lift arm 21R and cause the first lift arm 21L and the second lift arm 21R to extend or retract at the same time.

The first control valve 30a is provided in a fluid passage that connects the hydraulic pump P and the bottom fluid chamber to each other. The first control valve 30a is capable of supplying hydraulic fluid delivered by the hydraulic pump P to the bottom fluid chamber by changing the opening.

The second control valve 30b is provided in a fluid passage that connects the bottom fluid chamber and the hydraulic fluid tank T to each other. The second control valve 30b is capable of allowing hydraulic fluid from the bottom fluid chamber to be drained to the hydraulic fluid tank T by changing the opening.

Accordingly, when the controller 11 outputs control current to the first control valve 30a and the opening of the first control valve 30a is changed, the hydraulic fluid delivered by the hydraulic pump P is supplied to the bottom fluid chamber and the lift cylinder 26 extends, so that the lift arm 21 is raised. On the contrary, when the controller 11 outputs control current to the second control valve 30b and the opening of the second control valve 30b is changed, the hydraulic fluid in the bottom fluid chamber is drained to the hydraulic fluid tank T and the lift cylinder 26 is allowed to retract. Thus, the lift cylinder 26 retracts due to the weight of the working device 3 and/or the lift arm 21, so that the lift arm 21 is lowered.

Note that, with regard to the control valve 30, the hydraulic system thereof is not limited to the structure described above, provided that the lift cylinder (hydraulic actuator) 26 can be controlled. For example, the first control valve 30a and the second control valve 30b are connected to the bottom fluid chambers in the above example. However, the second control valve 30b may be provided in a fluid passage that connects the hydraulic pump P and the rod fluid chamber to each other so that the hydraulic fluid delivered by the hydraulic pump P is supplied to the rod fluid chamber by changing the opening.

In the embodiment described above, the openings of the first control valve 30a and the second control valve 30b are changed, so that the lift cylinder 26 is controlled. However, the control valve(s) 30 may be a three-way solenoid switching valve that can switch between a first position in which the lift cylinder 26 extends, a second position in which the lift cylinder 26 stops being driven, and a third position in which the lift cylinder 26 retracts.

In the embodiment described above, the first control valve 30a and the second control valve 30b directly adjust the hydraulic fluid to actuate the lift cylinder 26. However, the first control valve 30a and the second control valve 30b may cause pilot fluid to act on a control valve connected to the lift cylinder(s) 26, and the control valve may adjust the hydraulic fluid to actuate the lift cylinder(s) 26. The structure of the hydraulic system is not limited to the structure described above.

The operating equipment 10 includes a first manual operator 42 to operate the drive device (lifting device) 8 (to raise or lower the working device 3). The first manual operator 42 is a portion of the operating equipment 10 to operate the target value of the position of the lift arm(s) 21. The controller 11 controls the control valve(s) 30 in response to the operation of the first manual operator 42 such that the deviation ΔD between the actual position of the lift arm 21 and the target value is zero.

As illustrated in FIG. 2, the working machine 1 includes a detector 15 to detect the actual position of the lift arm(s) 21. The detector 15 is a sensor to calculate the position of the lift cylinder(s) 26. The detector 15 is connected to the controller 11 and outputs a detected signal (detection signal) to the controller 11.

In the present embodiment, the detector 15 is a sensor (lift arm sensor) to detect the angle of the lift arm(s) 21, and the controller 11 controls the control valve(s) 30 based on the angle of the lift arm(s) 21 as the position of the lift arm(s) 21. That is, the controller 11 controls the control valve(s) 30 to actuate the lift cylinder(s) 26 such that the deviation ΔD between the actual position (actual angle of the lift arm(s) 21) and the target value (target angle of the lift arm(s) 21) is zero. An example of the lift arm sensor 15 is a rotational displacement variable resistor such as a potentiometer. The lift arm sensor 15 outputs a signal (angle signal) of the detected angle to the controller 11.

The lift arm sensor 15 is not limited, provided that the angle of the lift arm(s) 21 can be detected. For example, the detector 15 may be a lift cylinder sensor to detect the extension (stroke) of the lift cylinder(s) 26, provided that parameter(s) to detect the actual position of the lift arm(s) 21 can be detected. In such a case, the controller 11 controls the control valve(s) 30 based on the degree of extension of the lift cylinder(s) 26 as the position of the lift arm(s) 21. That is, the controller 11 controls the control valve(s) 30 to actuate the lift cylinder(s) 26 such that the deviation ΔD between the actual position (the degree of the actual extension of the lift cylinder 26) and the target value (the degree of the target extension of the lift cylinder 26) is zero.

The controller 11 may control the control valve(s) 30 based on the height of predetermined portion(s) (e.g., rear end portion(s)) of the lift arm(s) 21 in the vertical direction as the position of the lift arm(s) 21. In such a case, the controller 11 calculates the height of the rear end portion(s) of the lift arm(s) 21 in the vertical direction based on the parameter(s) (the actual angle of the lift arm(s) 21 and/ or the degree of the actual extension of the lift cylinder(s) 26) detected by the detector 15 and on a predetermined arithmetic expression. The controller 11 controls the control valve(s) 30 to actuate the lift cylinder(s) 26 such that the deviation ΔD between the actual position (such as the height of the rear end portion(s) of the lift arm(s) 21) and the target value (such as the target height of the rear end portion(s) of the lift arm(s) 21) is zero.

In an example described below, the first manual operator 42 controls the angle of the lift arm(s) 21 as the target value, and the controller 11 controls the control valve(s) 30 such that the deviation ΔD between the actual position (the actual angle of the lift arm(s) 21) and the target value (the target angle of the lift arm(s) 21) is zero.

An example of the first manual operator 42 is a position lever 42a. The position lever 42a is used to raise and lower the working device 3 and is operated by being swung. The position lever 42a is provided with a potentiometer to detect the amount of operation of the position lever 42a. The controller 11 can define the target value (target angle) of the lift arm(s) 21 based on an operation signal outputted from the potentiometer. As the amount of operation of the position lever 42a increases, the target value defined by the controller 11 increases according to the amount of operation. As the amount of operation of the position lever 42a decreases, the target value defined by the controller 11 decreases according to the amount of operation.

The first manual operator 42 is not limited to the position lever 42a but may include a lifting manual operator 42b that differs from the position lever 42a and that is used to raise and lower the working device 3. Examples of the lifting manual operator 42b include a push button switch such as a tactile switch and a seesaw switch. The lifting manual operator 42b is connected to the controller 11 and outputs an operation signal to the controller 11. The controller 11 defines the target value according to the amount of operation of the lifting manual operator 42b (such as the time for which the lifting manual operator 42b is operated or the number of times the lifting manual operator 42b is operated). In the present embodiment, the lifting manual operator 42b includes a raising manual operator 42b1 to increase the target value of the lift arm(s) 21 and a lowering manual operator 42b2 to reduce the target value of the lift arm(s) 21. That is, if the raising manual operator 42b1 is operated, the controller 11 defines a larger target value according to the operation. If the lowering manual operator 42b2 is operated, the controller 11 defines a smaller target value according to the operation.

As illustrated in FIG. 1, the position lever 42a is provided inside the protection structure 6, and the lifting manual operator 42b is provided outside (for example, laterally from the lifting device 8, or a rear fender) the protection structure 6.

In the example described above, the controller 11 defines a target value according to the amount of operation of the first manual operator 42. However, the working machine 1 may include an upper limit manual operator 43 to operate the upper limit value of the position of the lift arm(s) 21 and a lower limit manual operator 44 to operate the lower limit value of the position of the lift arm 21, and the first manual operator 42 may include a raising/lowering switch 45 to raise and lower the lift arm(s) 21 up to the upper limit value or the lower limit value of the position of the lift arm(s) 21.

In the case where the working machine 1 includes the upper limit manual operator 43 and the lower limit manual operator 44, the controller 11 actuates the lift arm(s) 21 within the range from the upper limit value to the lower limit value of the position of the lift arm(s) 21, inclusive, also when controlling the control valve(s) 30 according to the operation of the position lever 42a and/or the lifting manual operator 42b as the first manual operator 42.

The controller 11 outputs control current to the control valve 30 (which may be hereinafter the control valve 30 or the control valves 30) based on an operation signal outputted from the first manual operator 42, to control the control valve 30. For example, the controller 11 determines each current value I of the control current to the control valve 30 based on the operation signal, a first control graph M1, and a third control graph M2. The first control graph M1 and the third control graph M2 are stored in the storing unit 11a in advance.

In the case where the lift arm 21 (which may be hereinafter the lift arm 21 or the lift arms 21) is raised, the target value is higher than the actual position, and therefore the deviation ΔD is positive. In the case where the lift cylinder 26 (which may be hereinafter the lift cylinder 26 or the lift cylinders 26) is lowered, the target value is lower than the actual position, and therefore the deviation ΔD is negative. In the following description, however, the absolute value of the difference between the target value and the actual position is used as the deviation ΔD for convenience of description.

The first control graph M1 and the third control graph M2 may be the same or may differ from each other between the case where the lift arm 21 is raised and the case where the lift arm 21 is lowered.

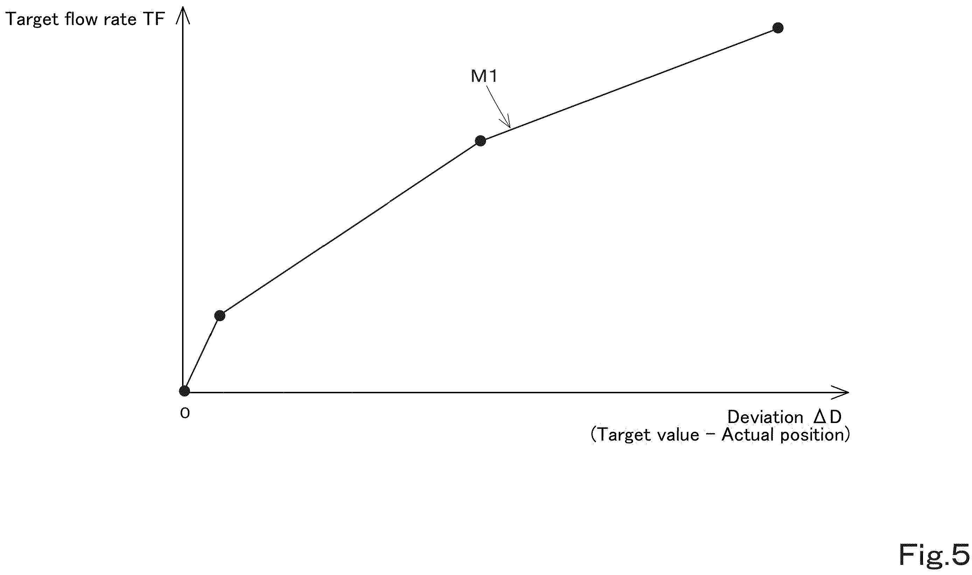

FIG. 5 illustrates an example of the first control graph M1. The first control graph M1 is a graph (a chart) that represents the relationship between the target flow rate TF of hydraulic fluid to actuate the hydraulic actuator 26 and the deviation ΔD between the actual position and the target value. In the chart illustrated in FIG. 5, the horizontal axis represents the deviation ΔD between the actual position and the target value, and the vertical axis represents the target flow rate TF of hydraulic fluid to actuate the hydraulic actuator 26. On the example of the first control graph M1 illustrated in FIG. 5, the target flow rate TF changes such that, as the deviation ΔD of the actual position from the target value increases, the target flow rate TF increases sharply and then increases gradually.

The first control graph M1 illustrated in FIG. 5 is merely an example. The target flow rate TF may change such that the target flow rate TF increases gradually and then increases sharply or proportionally increases in a substantially straight line as the deviation ΔD of the actual position from the target value increases.

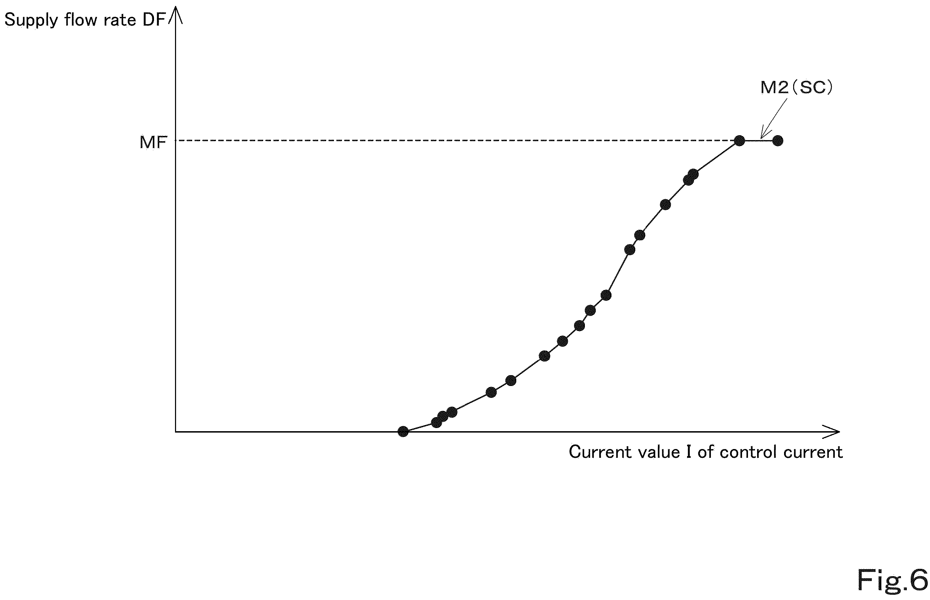

FIG. 6 illustrates an example of the third control graph M2. The third control graph M2 is a graph (a chart) that represents the relationship between the current value I of the control current outputted to predetermined control valve(s) 30 (such as a standard control valve) and the flow rate (supply flow rate DF) of hydraulic fluid from the predetermined control valve 30. The standard control valve is a control valve 30 that is a central-flow-rate control valve. That is, the third control graph M2 is defined based on flow rate characteristics SC of the standard control valve of design data or theoretical data. The standard flow rate characteristics SC are flow rate characteristics of the standard control valve, and are, for example, flow rate characteristics of design data or theoretical data. For this reason, the standard flow rate characteristics SC are design or theoretical flow rate characteristics of the standard control valve.

The standard flow rate characteristics SC may be obtained by performing arithmetic processing such as averaging or standardization of measured data of flow rate characteristics regarding a plurality of control valves 30. That is, the standard flow rate characteristics SC may be based on a plurality of pieces of measured data. The standard flow rate characteristics SC may be those indicated by standard product specification data of a control valve 30 provided by, for example, a manufacturer.

In the chart illustrated in FIG. 6, the horizontal axis represents the value I of control current (hereinafter may be referred to as "current value I"), and the vertical axis represents supply flow rate DF. In the example of the third control graph M2 illustrated in FIG. 6, as the current value I of the control current increases, the supply flow rate DF changes such that the supply flow rate DF increases gradually and then increases sharply.

The third control graph M2 in FIG. 6 is merely an example. The third control graph M2 need only be defined based on flow rate characteristics of design data or theoretical data of a predetermined control valve 30.

Therefore, the controller 11 first calculates the deviation ΔD of the actual position from the target value and then acquires the first control graph M1 and the third control graph M2 depending on the direction of operation (raising or lowering) of the lift arm 21. The controller 11 acquires the target flow rate TF based on the deviation ΔD and the first control graph M1. The controller 11, after acquiring the target flow rate TF, acquires the current value I of the control current based on the target flow rate TF and the third control graph M2. With this, the controller 11 outputs the acquired current value I to the control valve(s) 30 to control the control valve(s) 30.

It is noted here that the controller 11 gradually reduces the current value I as the deviation ΔD gradually decreases. The current value I of the control current to the control valve 30 is set to zero by the controller 11 when the deviation ΔD is zero. The controller 11 thus controls the control valve 30 based on the operation of the first manual operator 42 to drive the lift cylinder 26.

The controller 11 is configured or programmed to switch between a first mode and a second mode. The controller 11 selectively enters the first mode or the second mode. The first mode is a mode in which the controller 11 controls the control valve 30 by performing a first control based on the deviation ΔD of the actual position from the target value on the target flow rate TF. The second mode is a mode in which the controller 11 controls the control valve 30 by performing a second control including controlling the target flow rate TF to be lower than the first control when the deviation ΔD is more than zero and less than a predetermined deviation ΔD.

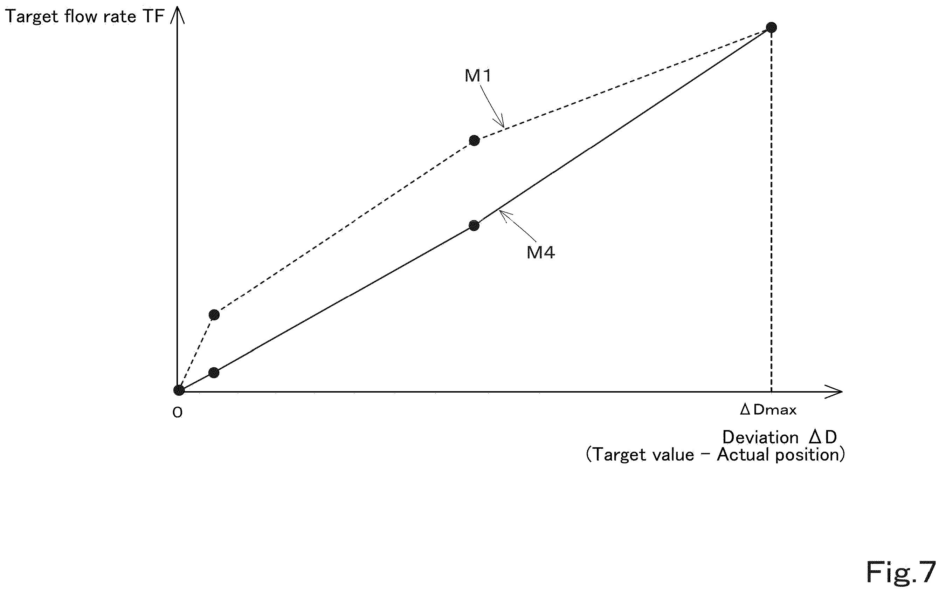

Specifically, the controller 11 controls the control valve 30 based on the first control graph M1 (first control) in the first mode. In the case where the controller 11 is in the second mode, when the driven member (lift arm) 21 is lowered, as illustrated in FIG. 7, the controller 11 controls the control valve 30 based on a second control graph M4 which is lower in target flow rate TF than the first control graph M1 at deviations ΔD from more than zero to less than the predetermined deviation ΔD (second control).

The second control graph M4 is stored in, for example, the storing unit 11a in advance. In FIG. 7, the first control graph M1 is represented by dashed line, and the second control graph M4 is represented by solid line. In the chart in FIG. 7, the horizontal axis represents the deviation ΔD of the actual position from the target value, and the vertical axis represents the target flow rate TF of hydraulic fluid to actuate the hydraulic actuator 26, similarly to FIG. 5.

Even when in the second mode, the controller 11 controls the control valve 30 by performing the first control when the driven member (lift arm) 21 is raised. That is, in the first mode, the controller 11 controls the control valve 30 based on the first control graph M1 both in the case where the lift arm 21 is raised and in the case where the lift arm 21 is lowered. In the second mode, however, the controller 11 controls the control valve 30 based on different graphs (the first control graph M1 and the second control graph M4) in the case where the lift arm 21 is raised and in the case where the lift arm 21 is lowered. That is, the controller 11 changes the manner in which the controller 11 controls the control valve 30 by switching modes in the case where the lift arm 21 is lowered, but does not change the manner in which the controller 11 controls the control valve 30 by switching modes in the case where the lift arm 21 is raised.

The following first describes switching modes of the controller 11 in detail. As illustrated in FIG. 2, the working machine 1 includes a switch 50 to perform switching between the first mode and the second mode of the controller 11. The switch 50 is a portion of the operating equipment 10 to perform switching between the modes of the controller 11. The controller 11 acquires an operation signal from the switch 50 and switches between the first mode and the second mode based on the operation signal.

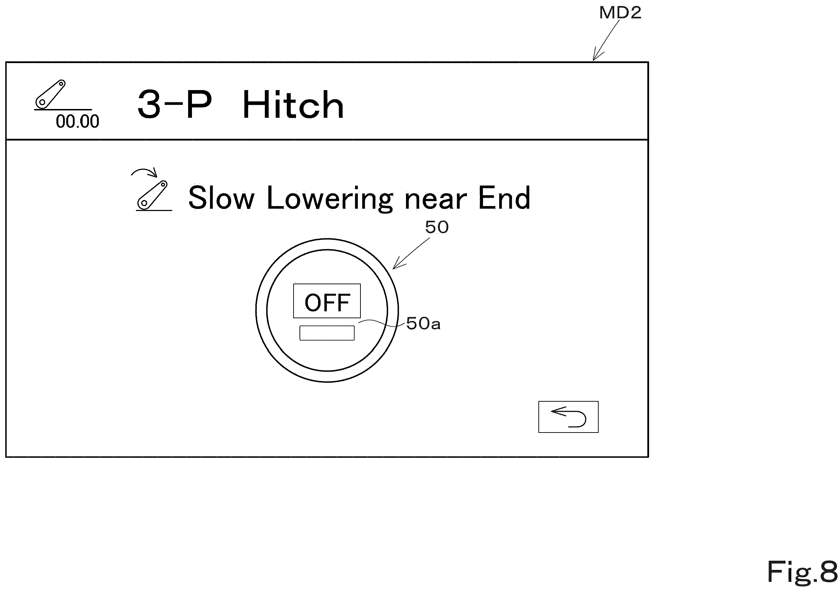

In the present embodiment, as illustrated in FIG. 8, the switch 50 is a display image displayed on the display unit 12a of the display 12. That is, the display 12 and the jog dial 41 function also as a portion of the operating equipment 10. When the jog dial 41 is operated, the display 12 displays, on the display unit 12a, an operation screen MD2 on which the switch 50 is displayed. In the example illustrated in FIG. 8, the switch 50 is a display image representing a switch, and includes a status indicator portion 50a.

The status indicator portion 50a is a display image that indicates whether the second mode is enabled. The status indicator portion 50a causes the manner of indication thereof to differ between the case where the second mode is enabled (that is, in the case where the first mode is disabled) and the case where the second mode is disabled (that is, in the case where the first mode is enabled). Specifically, the status indicator portion 50a displays the text "OFF" in the case where the second mode is disabled and grays out an image that represents a lamp. In the case where the second mode is enabled, the status indicator portion 50a displays the text "ON" and changes the color of the image that represents the lamp (for example, green).

The switch 50 may indicate that the switch 50 can be operated via the jog dial 41 by changing the manner of indication thereof. For example, in the case where the switch 50 can be operated, the switch 50 causes the color and thickness of the outline to differ from those in the case where the switch 50 cannot be operated.

The operator operates the jog dial 41 to make the switch 50 operable, and, by pressing the jog dial 41, can switch the status of the switch 50. The operation signal from the switch 50 issued by pressing the jog dial 41 is outputted from the display 12 to the controller 11.

Thus, in the case where the controller 11 is in the first mode, when the jog dial 41 is rotated to select the switch 50 and pressed to operate the switch 50, the controller 11 acquires the operation signal and enters the second mode. On the contrary, in the case where the controller 11 is in the second mode, when the jog dial 41 is rotated to select the switch 50 and pressed to operate the switch 50, the controller 11 acquires the operation signal and enters the first mode.

Note that, in the embodiment described above, the switch 50 is a display image (manual operator 51) to receive operation and is indirectly operated via the jog dial 41. However, the structure thereof is not limited to the structure described above, provided that at least the switch 50 is capable of being operated to switch the modes of the controller 11. For example, the switch 50 may include a physical tactile switch directly operated by the operator without using the jog dial 41.

The mode selected by the operation of the switch 50 is stored (kept) in the storing unit 11a. Therefore, the controller 11 can acquire the mode stored in the storing unit 11a even in the case where the starter relay 14 is turned off, and it is not necessary to operate the switch 50 every time the starter relay 14 is turned on (off).

In the case where the first manual operator 42 is operated to lower the lift arm 21, the switch 50 does not need to receive operation. In other words, in the case where the first manual operator 42 is operated to raise the lift arm 21 and in the case where the first manual operator 42 is not operated and the lift arm 21 is in the stopped state, the switch 50 receives operation. In such a case, the controller 11 acquires the operation signal from the first manual operator 42 and, if the difference between the actual position and the target value is positive and the controller 11 determines that the lift arm 21 is to be raised, the controller 11 outputs a signal (enabling signal) indicating that the switch 50 can be operated to the display 12. If the difference between the actual position and the target value is negative and the controller 11 determines that the lift arm 21 is to be lowered, the controller 11 outputs a signal (disabling signal) indicating that the switch 50 cannot be operated to the display 12.

In the case where the enabling signal is outputted from the controller 11, the display 12 allows the switch 50 to be displayed. In the case where the disabling signal is outputted, the display 12 grays out the displayed switch 50 or does not transition to the operation screen MD2 so that the switch 50 cannot be operated, so that the display 12 does not receive operation on the switch 50.

The second control graph M4 is defined such that at least the target flow rates TF at the deviations ΔD from more than zero to less than the predetermined deviation ΔD are lower than those of the first control graph M1. Specifically, in the case where the deviation ΔD is zero, the target flow rate TF in the second control graph M4 is equal to that in the first control graph M1. The second control graph M4 is defined such that the target flow rate TF is lower than that in the first control graph M1 when the deviation ΔD is more than zero and less than a predetermined value, and that the target flow rate TF is equal to or lower than that in the first control graph M1 when the deviation ΔD is equal to or more than the predetermined value.

In the present embodiment, the predetermined value is the maximum value of the deviation ΔD (maximum deviation ΔDmax) defined by the first control graph M1. That is, in the case where the deviation ΔD is zero or the maximum deviation ΔDmax, the target flow rate TF in the second control graph M4 is equal to that in the first control graph M1.

In the example of the second control graph M4 illustrated in FIG. 7, when the deviation ΔD is more than zero and less than the maximum deviation ΔDmax (the deviation ΔD is in the range from zero to the maximum deviation ΔDmax), as the deviation ΔD of the actual position from the target value increases, the target flow rate TF increases in proportion to the deviation ΔD within the range less than the target value in the first control graph M1.

Therefore, when the operator operates the first manual operator 42 to reduce the target value to a value lower than the actual position, the target flow rate TF acquired by the controller 11 in the second mode increases in accordance with the second control graph M4 as the deviation ΔD increases. When the lift arm 21 is lowered and the target value approaches the actual position, that is, when the deviation ΔD approaches zero, the target flow rate TF acquired by the controller 11 in the second mode decreases as the deviation ΔD approaches zero.

In the case where the deviation ΔD is in the range from zero to the predetermined deviation ΔD, the target flow rate TF in the second mode is lower than that in the first mode when the deviation ΔD is the same. Therefore, the current value I of the control current acquired by the controller 11 in the second mode is smaller than in the first mode. This makes it possible, in the second mode, to reduce the drive speed when lowering of the driven member 21 is about to end as compared to the first mode when the driven member 21 is lowered.

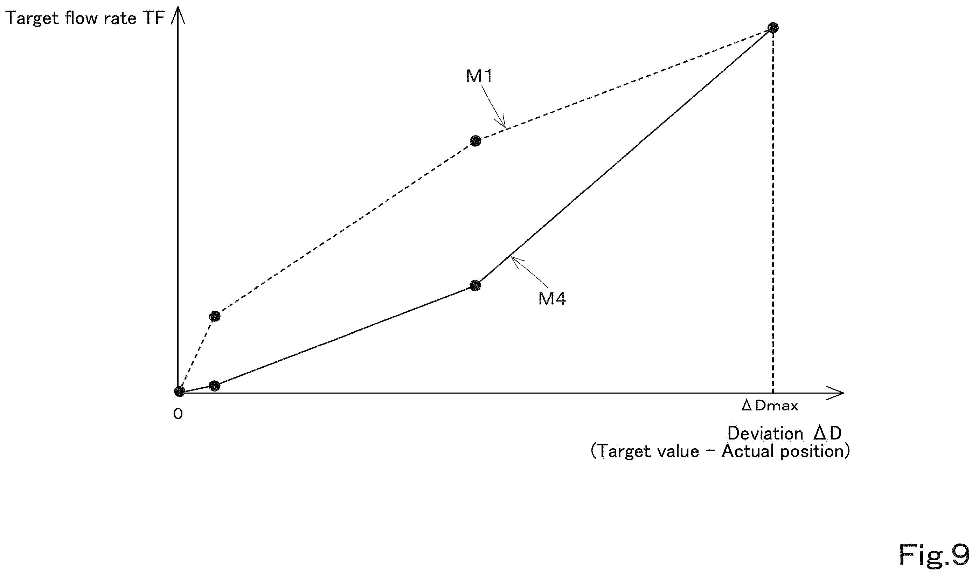

Note that the second control graph M4 in FIG. 7 is an example. The target flow rate TF may change such that the target flow rate TF increases gradually and then increases sharply as the deviation ΔD of the actual position from the target value increases like a variation illustrated in FIG. 9, provided that the second control graph M4 is defined such that the target flow rate TF is low at least when the deviation ΔD is in the range from zero to the predetermined deviation ΔD. Furthermore, although the controller 11 can switch only between the first mode and the second mode in the present embodiment, the controller 11 may be capable of switching between the first mode, the second mode, and another mode(s). In such a case, in the other mode, instead of the first control graph M1 and the second control graph M4, the controller 11 acquires a graph defined such that the target flow rate TF is lower than the first and second control graphs M1 and M4 at least when the deviation ΔD is in the range from zero to the predetermined deviation ΔD.

In the examples described in the embodiments described above, the controller 11 acquires the second control graph M4 stored in the storing unit 11a in advance. However, the controller 11 may be configured or programmed to calculate a second control graph M4 from the first control graph M1 based on a predetermined arithmetic expression when the first mode is switched to the second mode.

As illustrated in FIG. 2, the working machine 1 may include a manual operator 51 to change the maximum flow rate MF of hydraulic fluid to actuate the hydraulic actuator 26. The maximum flow rate MF described herein refers to the maximum value of the flow rate of hydraulic fluid that can be supplied by the control valve 30 under control of the controller 11. The manual operator 51 is a portion of the operating equipment 10 to operate the maximum flow rate MF. The manual operator 51 can communicate with the controller 11, and the operation signal from the manual operator 51 is outputted to the controller 11. The controller 11 acquires the operation signal outputted from the manual operator 51 and controls the control valve 30 based on the maximum flow rate MF changed via the manual operator 51.

An example of the manual operator 51 is a dial switch having a plurality of switch positions. The values of the maximum flow rate MF are assigned to the respective switch positions of the manual operator 51. The storing unit 11a stores a flow rate graph that represents the relationship between the operation signal outputted from the manual operator 51 and the maximum flow rate MF. The controller 11 acquires the maximum flow rate MF based on the operation signal outputted from the manual operator 51and on the flow rate graph. For example, in the flow rate graph according to the present embodiment, the maximum flow rate MF is proportional to the operation amount of the manual operator 51. The maximum flow rate MF is defined such that the maximum flow rate MF is highest in the case where the operation amount of the manual operator 51 is 100% and lowest in the case where the operation amount is 0%.

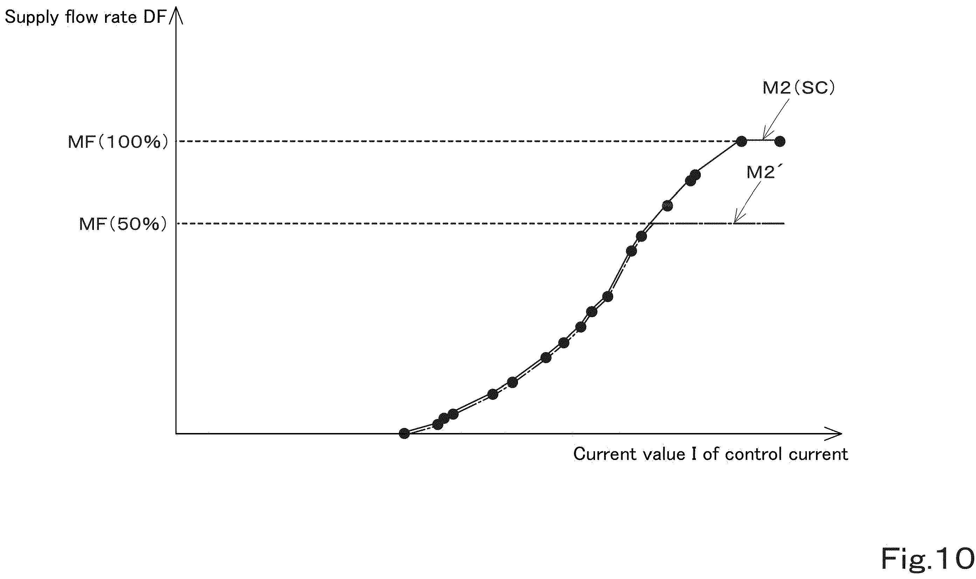

The controller 11, after acquiring the maximum flow rate MF, corrects the maximum flow rate MF in the third control graph M2 based on the acquired maximum flow rate MF. Specifically, the controller 11 corrects the portion of the third control graph M2 that is higher in the supply flow rate DF than the acquired maximum flow rate MF such that the corrected portion is equal to the maximum flow rate MF. With this, as illustrated in FIG. 10, the third control graph M2 is corrected based on the maximum flow rate MF controlled by the manual operator 51. In the example illustrated in FIG. 10, the uncorrected third control graph M2 when the operation amount is 100% is represented by solid line, and a corrected third control graph M2' when the operation amount is 50% is represented by dot-dash line.

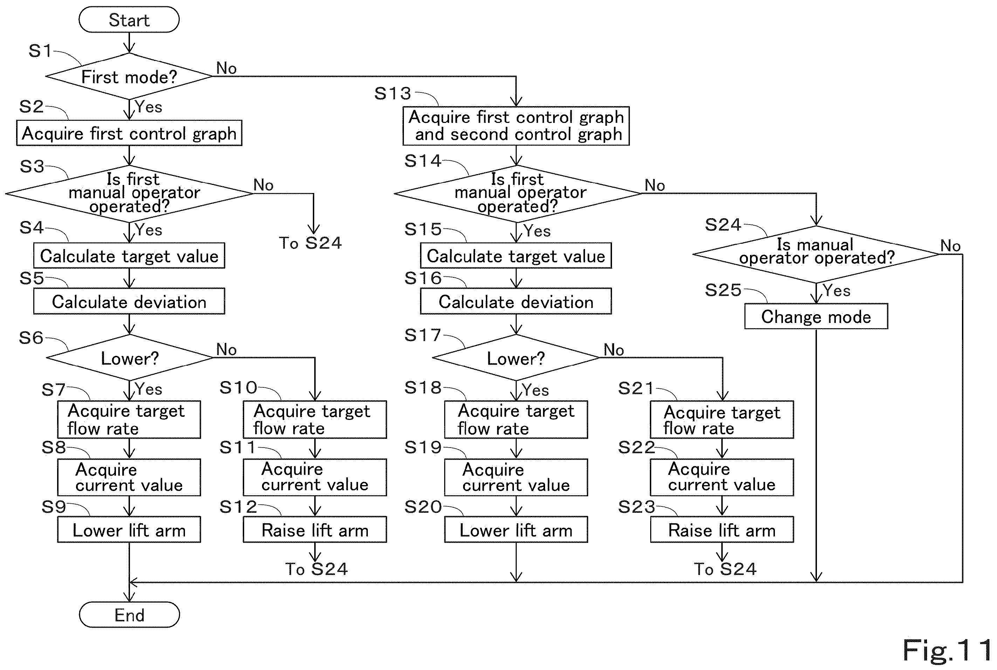

The flow of steps in the first mode and the second mode performed by the controller 11 will now be described. FIG. 11 illustrates the flow of steps in the first mode and the second mode performed by the controller 11. The steps illustrated in FIG. 11 are performed by CPU(s) based on software program(s) stored in the storing unit 11a of the controller 11 in advance. The controller 11 first determines whether the current mode is the first mode (S1). If it is determined that the current mode is the first mode (Yes at S1), the controller 11 acquires a first control graph M1 (S2).

The controller 11 determines whether the first manual operator 42 is operated (S3). If it is determined that the first manual operator 42 is operated based on the operation signal outputted from the first manual operator 42 (Yes at S3), the controller 11 calculates a target value (S4).

The controller 11 calculates the deviation ΔD based on the actual position and the target value (S5). The controller 11 determines whether the lift arm 21 is to be lowered based on the actual position and the target value (S6). If the lift arm 21 is to be lowered (Yes at S6), the controller 11 acquires the target flow rate TF based on the deviation ΔD and the first control graph M1 (S7). The controller 11, after acquiring the target flow rate TF (S7), acquires the current value I of the control current based on the target flow rate TF and the third control graph M2 (S8). With this, the controller 11 outputs the acquired current value I to the control valve 30 to control the control valve 30, so that the lift arm 21 is lowered (S9).

In the case where the lift arm 21 is to be raised (No at S6), the controller 11 acquires the target flow rate TF based on the deviation ΔD and the first control graph M1 (S10). The controller 11, after acquiring the target flow rate TF (S10), acquires the current value I of the control current based on the target flow rate TF and the third control graph M2 (S11). With this, the controller 11 outputs the acquired current value I the control valve 30 to control the control valve 30, so that the lift arm 21 is raised (S12).

On the contrary, if it is determined that the current mode is not the first mode but the second mode (No at S1), the controller 11 acquires a first control graph M1 and a second control graph M4 (S13). Next, the controller 11 determines whether the first manual operator 42 is operated (S14). If it is determined that the first manual operator 42 is operated based on the operation signal outputted from the first manual operator 42 (Yes at S14), the controller 11 calculates a target value (S15).

The controller 11 calculates the deviation ΔD based on the actual position and the target value (S16). The controller 11 determines whether the lift arm 21 is to be lowered based on the actual position and the target value (S17). In the case where the lift arm 21 is to be lowered (Yes at S17), the controller 11 acquires the target flow rate TF based on the deviation ΔD and the second control graph M4 (S18). The controller 11, after performing step S18, acquires the current value I of the control current based on the target flow rate TF and the third control graph M2 (S19). With this, the controller 11 outputs the acquired current value I to the control valve 30 to control the control valve 30, so that the lift arm 21 is lowered (S20).

On the contrary, in the case where the lift arm 21 is to be raised (No at S17), the controller 11 acquires the target flow rate TF based on the deviation ΔD and the first control graph M1 (S21). The controller 11, after acquiring the target flow rate TF (S21), acquires the current value I of the control current based on the target flow rate TF and the third control graph M2 (S22). With this, the controller 11 outputs the acquired current value I to the control valve 30 to control the control valve 30, so that the lift arm 21 is raised (S23).

If it is determined that the first manual operator 42 is not operated (No at S3 or No at S14) or in the case where the controller 11 causes the lift arm 21 to be raised (S12 or S23), the controller 11 determines whether the switch 50 is operated (S24). If it is determined that the switch 50 is operated based on the operation signal outputted from the switch 50 (Yes at S24), the controller 11 enters another mode from the current mode (S25). Note that the controller 11 causes the storing unit 11a to store the mode the controller 11 entered.

The controller 11 in the foregoing embodiments controls the control valve 30 based on the second control graph M4 in the case where the driven member 21 is lowered in the second mode. Note, however, that it is only necessary to cause the drive speed to be lower than in the first mode at least when the lowering of the driven member 21 is about to end. That is, the controller 11 may be configured or programmed to, in the case where the driven member 21 is to be lowered, monitor increases and decreases in the deviation ΔD of the actual position from the target value, control the control valve 30 based on the first control graph M1 if the deviation ΔD tends to increase, and control the control valve 30 based on the second control graph M4 if the deviation ΔD tends to decrease.

In such a case, the controller 11 acquires a second control graph M4 that differs depending on the deviation ΔD (point-of-change ΔCD) at the point in time at which the deviation starts to decrease. Specifically, the controller 11 acquires a second control graph M4 defined such that the target flow rate TF is low within the range from zero to a predetermined deviation ΔD (point-of-change ΔCD), i.e., the range in which the deviation ΔD is lower than the point-of-change ΔCD at which the target flow rate TF is equal to that at the point-of-change ΔCD on the first control graph M1. For example, the controller 11 calculates a second control graph M4 based on a predetermined arithmetic expression to acquire the second control graph M4. For example, the controller 11 corrects the first control graph M1 such that the target flow rate TF is reduced within the range in which the deviation ΔD is not less than zero and not more than the point-of-change ΔCD to calculate the second control graph M4.

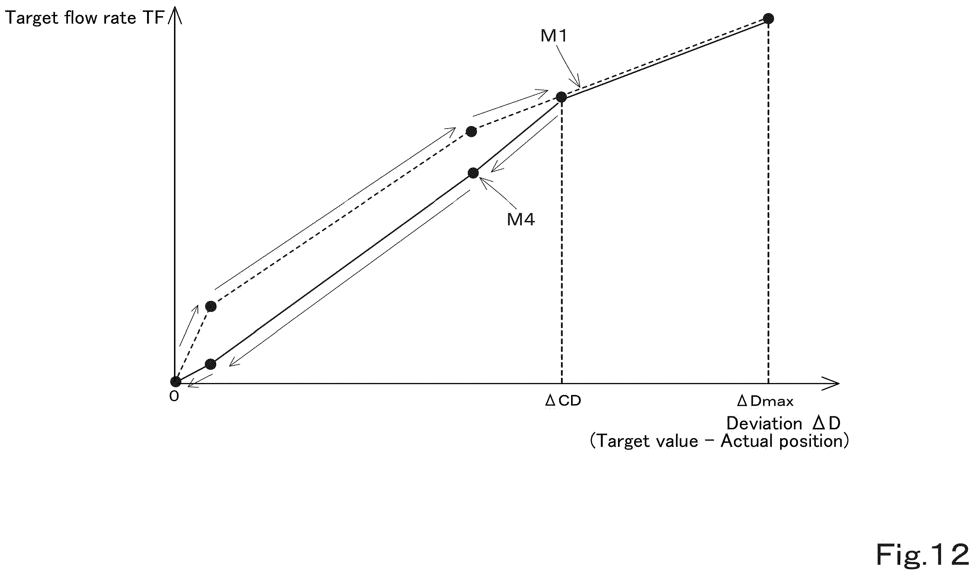

FIG. 12 illustrates the first control graph M1 and the second control graph M4 according to a variation. In FIG. 12, the first control graph M1 is represented by dashed line, and the second control graph M4 is represented by solid line. In the chart illustrated in FIG. 12, the horizontal axis represents the deviation ΔD of the actual position from the target value, and the vertical axis represents the target flow rate TF of hydraulic fluid to actuate the hydraulic actuator 26, similarly to FIGS. 5 and 7.

As illustrated in FIG. 12, the second control graph M4 according to the present variation is defined such that the target flow rate TF is low at least when the deviation ΔD is more than zero and less than a predetermined deviation ΔD as compared to the first control graph M1. Specifically, on the second control graph M4, the target flow rate TF is equal to that in the first control graph M1 in the case where the deviation ΔD is zero. On the second control graph M4, the target flow rate TF is equal to that in the first control graph M1 also in the case where the deviation ΔD is equal to the point-of-change ΔCD.

Therefore, when the operator operates the first manual operator 42 to cause the target value to be lower than the actual position, the target flow rate TF acquired by the controller 11 in the second mode increases in accordance with the first control graph M1 as the deviation ΔD increases. When the deviation ΔD tends to decrease, the target flow rate TF acquired by the controller 11 in the second mode decreases in accordance with the second control graph M4 as the deviation ΔD approaches zero.

Thus, since the target flow rate TF does not vary when the deviation ΔD starts decreasing, it is possible to prevent or reduce shock on the driven member 21.

Preferred embodiments of the present invention provide working machines 1 and methods of controlling a working machine 1 described in the following items.

(Item 1) A working machine 1 including a drive device 8 including a hydraulic actuator 26 to be actuated by hydraulic fluid and a driven member 21 to be raised and lowered by the hydraulic actuator 26, a control valve 30 to control the hydraulic actuator 26, and a controller 11 configured or programmed to control the control valve 30 to cause the driven member 21 to move to a target position, wherein the controller 11 is configured or programmed to switch between a first mode and a second mode, the first mode being a mode in which the controller 11 controls the control valve 30 by performing a first control based on a target flow rate TF of hydraulic fluid to actuate the hydraulic actuator 26 and a deviation ΔD of an actual position of the driven member 21 from a target value, the second mode being a mode in which the controller 11 controls the control valve 30 by performing a second control including controlling the target flow rate TF to be lower than the first control when the deviation ΔD is more than zero and less than a predetermined deviation ΔD.

With the working machine 1 according to item 1, when lowering the driven member 21, it is possible, by switching the controller 11 to the second mode, to reduce the drive speed when lowering of the driven member 21 is about to end. This makes it possible to use different modes appropriately when reducing shock resulting from the driven member 21 reaching the target position and when prioritizing efficiency.

(Item 2) The working machine 1 according to item 1, wherein the controller 11 is configured or programmed to control the control valve 30 by performing the first control when the driven member 21 is raised even in a case that the controller 11 is in the second mode.

With the working machine 1 according to item 2, it is possible to reduce shock that would occur when the driven member 21 is lowered and improve efficiently, without causing a reduction in efficiency when the driven member 21 is raised.

(Item 3) The working machine 1 according to item 1 or 2, further including a switch 50 to be operated to perform switching between the first mode and the second mode of the controller 11, wherein the controller 11 is configured or programmed to switch between the first mode and the second mode in response to an operation of the switch 50.

With the working machine 1 according to item 3, the operator is able to appropriately switch between the first mode and the second mode depending on the situation.

(Item 4) The working machine 1 according to any one of items 1 to 3, further including a manual operator 51 to change a maximum flow rate MF of hydraulic fluid to actuate the hydraulic actuator 26, wherein the controller 11 is configured or programmed to control the control valve 30 based on the maximum flow rate MF changed via the manual operator 51.

With the working machine 1 according to item 4, it is not only possible to use different modes appropriately when reducing shock resulting from the driven member 21 reaching the target position and when prioritizing efficiency, but also possible to change the speed at which the working device 3 is lowered also based on the weight of the working device 3 etc.

(Item 5) The working machine 1 according to any one of items 1 to 4, wherein the drive device 8 is a lifting device 8 to raise and lower a working device 3, the hydraulic actuator 26 is a lift cylinder, and the driven member 21 is a lift arm to be driven by actuating the lift cylinder 26.

With the working machine 1 according to item 5, it is possible to achieve the foregoing unique effect(s), and the controller 11 makes it possible, when lowering the working device 3 in the second mode, to reduce the drive speed when lowering of the working device 3 is about to end. This makes it possible to prevent or reduce the likelihood that the working device 3 will undergo shock when the lowering of the working device 3 is about to end.

(Item 6) The working machine 1 according to any one of items 1 to 5, wherein the controller 11 is configured or programmed to control the control valve 30 by performing the second control when the driven member 21 is lowered in a case that the controller 11 is in the second mode.

With the working machine 1 according to item 6, it is possible, by switching the controller 11 to the second mode, to reduce shock that would occur when the driven member 21 is lowered.

(Item 7) A method of controlling a working machine 1 which includes a drive device 8 including a hydraulic actuator 26 to be actuated by hydraulic fluid and a driven member 21 to be raised and lowered by the hydraulic actuator 26, a control valve 30 to control the hydraulic actuator 26, and a controller 11 to control the control valve 30 to cause the driven member 21 to move to a target position, the method including causing the controller 11 to switch between a first mode and a second mode, the first mode being a mode in which the controller 11 controls the control valve 30 by performing a first control based on a target flow rate TF of hydraulic fluid to actuate the hydraulic actuator 26 and a deviation ΔD of an actual position of the driven member 21 from a target value, the second mode being a mode in which the controller 11 controls the control valve 30 by performing a second control including controlling the target flow rate TF to be lower than the first control when the deviation ΔD is more than zero and less than a predetermined deviation ΔD.

With the method of controlling a working machine 1 according to item 7, when lowering the driven member 21, it is possible, by switching the controller 11 to the second mode, to reduce the drive speed when lowering of the driven member 21 is about to end. This makes it possible to use different modes appropriately when reducing shock resulting from the driven member 21 reaching the target position and when prioritizing efficiency.

While preferred embodiments of the present invention have been described above, it is to be understood that variations and modifications will be apparent to those skilled in the art without departing from the scope of the present invention which is defined by the following claims. The scope of the present invention, therefore, is to be determined solely by the following claims.

## Claims

1. A working machine (1) comprising:
a drive device (8) including:
a hydraulic actuator (26) to be actuated by hydraulic fluid; and
a driven member (21) to be raised and lowered by the hydraulic actuator (26);
a control valve (30) to control the hydraulic actuator (26); and
a controller (11) configured or programmed to control the control valve (30) to cause the driven member (21) to move to a target position; wherein
the controller (11) is configured or programmed to switch between a first mode and a second mode, the first mode being a mode in which the controller (11) controls the control valve (30) by performing a first control based on a target flow rate (TF) of hydraulic fluid to actuate the hydraulic actuator (26) and based on a deviation (ΔD) of an actual position of the driven member (21) from a target value, the second mode being a mode in which the controller (11) controls the control valve (30) by performing a second control including controlling the target flow rate (TF) to be lower than in the first control when the deviation (ΔD) is more than zero and less than a predetermined deviation (ΔD);
**characterised in that** the working machine (1) further comprises a switch (50) to be operated to perform switching between the first mode and the second mode of the controller (11); and
the controller (11) is configured or programmed to switch between the first mode and the second mode in response to an operation of the switch (50).

2. The working machine (1) according to claim 1, wherein the controller (11) is configured or programmed to control the control valve (30) by performing the first control when the driven member (21) is raised even in a case that the controller (11) is in the second mode.

3. The working machine (1) according to claim 1 or 2, further comprising:
a manual operator (51) to change a maximum flow rate (MF) of hydraulic fluid to actuate the hydraulic actuator (26); wherein
the controller (11) is configured or programmed to control the control valve (30) based on the maximum flow rate (MF) changed via the manual operator (51).

4. The working machine (1) according to any one of claims 1 to 3, wherein
the drive device (8) is a lifting device (8) to raise and lower a working device (3);
the hydraulic actuator (26) is a lift cylinder; and
the driven member (21) is a lift arm to be driven by actuating the lift cylinder (26).

5. The working machine (1) according to any one of claims 1 to 4, wherein the controller (11) is configured or programmed to control the control valve (30) by performing the second control when the driven member (21) is lowered in a case that the controller (11) is in the second mode.

6. A method of controlling a working machine (1) according to claim 1
which includes a drive device (8) including a hydraulic actuator (26) to be actuated by hydraulic fluid and a driven member (21) to be raised and lowered by the hydraulic actuator (26), a control valve (30) to control the hydraulic actuator (26), a controller (11) to control the control valve (30) to cause the driven member (21) to move to a target position, and a switch (50), the method comprising:
causing the controller (11) to, in response to an operation of the switch (50), switch between a first mode and a second mode, the first mode being a mode in which the controller (11) controls the control valve (30) by performing a first control based on a target flow rate (TF) of hydraulic fluid to actuate the hydraulic actuator (26) and based on a deviation (ΔD) of an actual position of the driven member (21) from a target value, the second mode being a mode in which the controller (11) controls the control valve (30) by performing a second control including controlling the target flow rate (TF) to be lower than in the first control when the deviation (ΔD) is more than zero and less than a predetermined deviation (ΔD).

## Patentansprüche

1. Arbeitsmaschine (1), umfassend:
eine Antriebsvorrichtung (8), die Folgendes beinhaltet:
einen hydraulischen Aktuator (26), der durch Hydraulikfluid zu betätigen ist; und
ein angetriebenes Element (21), um durch den hydraulischen Aktuator (26) angehoben und abgesenkt zu werden;
ein Steuerventil (30) zum Steuern des hydraulischen Aktuators (26); und
eine Steuerung (11), die konfiguriert oder programmiert ist, um das Steuerventil (30) zu steuern, um das angetriebene Element (21) zu veranlassen, sich zu einer Soll-Position zu bewegen; wobei
die Steuerung (11) konfiguriert oder programmiert ist, um zwischen einem ersten Modus und einem zweiten Modus umzuschalten, wobei der erste Modus ein Modus ist, in dem die Steuerung (11) das Steuerventil (30) durch Durchführen einer ersten Steuerung basierend auf einer Soll-Durchflussmenge (TF) von Hydraulikfluid zum Betätigen des hydraulischen Aktuators (26) und basierend auf einer Abweichung (ΔD) einer Ist-Position des angetriebenen Elements (21) von einem Soll-Wert steuert, wobei der zweite Modus ein Modus ist, in dem die Steuerung (11) das Steuerventil (30) durch Durchführen einer zweiten Steuerung steuert, die ein Steuern der Soll-Durchflussmenge (TF) beinhaltet, um niedriger zu sein als wie bei der ersten Steuerung, wenn die Abweichung (ΔD) größer als Null und kleiner als eine vorbestimmte Abweichung (ΔD) ist;
**dadurch gekennzeichnet, dass**
die Arbeitsmaschine (1) ferner einen Schalter (50) umfasst, der zu betätigen ist, um ein Umschalten zwischen dem ersten Modus und dem zweiten Modus der Steuerung (11) durchzuführen; und
die Steuerung (11) konfiguriert oder programmiert ist, um als Reaktion auf eine Betätigung des Schalters (50) zwischen dem ersten Modus und dem zweiten Modus umzuschalten.

2. Arbeitsmaschine (1) nach Anspruch 1, wobei die Steuerung (11) konfiguriert oder programmiert ist, um das Steuerventil (30) durch Durchführen der ersten Steuerung zu steuern, wenn das angetriebene Element (21) angehoben wird, selbst wenn die Steuerung (11) in dem zweiten Modus ist.

3. Arbeitsmaschine (1) nach Anspruch 1 oder 2, ferner umfassend:
eine manuelle Betätigungseinrichtung (51) zum Ändern eines maximalen Durchflusses (MF) von Hydraulikfluid zum Betätigen des hydraulischen Aktuators (26); wobei
das Steuergerät (11) konfiguriert oder programmiert ist, um das Steuerventil (30) basierend auf der maximalen Durchflussmenge (MF) zu steuern, die über die manuelle Betätigungseinrichtung (51) geändert wird.

4. Arbeitsmaschine (1) nach einem der Ansprüche 1 bis 3, wobei
die Antriebsvorrichtung (8) eine Hubvorrichtung (8) zum Anheben und Absenken einer Arbeitsvorrichtung (3) ist;
der hydraulische Aktuator (26) ein Hubzylinder ist; und
das angetriebene Element (21) ein Hubarm ist, der durch Betätigen des Hubzylinders (26) angetrieben wird.

5. Arbeitsmaschine (1) nach einem der Ansprüche 1 bis 4, wobei die Steuerung (11) konfiguriert oder programmiert ist, um das Steuerventil (30) durch Durchführen der zweiten Steuerung zu steuern, wenn das angetriebene Element (21) abgesenkt wird, wenn die Steuerung (11) in dem zweiten Modus ist.

6. Verfahren zum Steuern einer Arbeitsmaschine (1) nach Anspruch 1, die eine Antriebsvorrichtung (8), die einen hydraulischen Aktuator (26) beinhaltet, der durch Hydraulikfluid zu betätigen ist, und ein angetriebenes Element (21), das durch den hydraulischen Aktuator (26) anzuheben und abzusenken ist, ein Steuerventil (30) zum Steuern des hydraulischen Aktuators (26), eine Steuerung (11) zum Steuern des Steuerventils (30), um das angetriebene Element (21) zu veranlassen, sich in eine Zielposition zu bewegen, und einen Schalter (50) beinhaltet, das Verfahren umfassend:
Veranlassen der Steuerung (11), als Reaktion auf eine Betätigung des Schalters (50) zwischen einem ersten Modus und einem zweiten Modus umzuschalten, wobei der erste Modus ein Modus ist, in dem die Steuerung (11) das Steuerventil (30) durch Durchführen einer ersten Steuerung basierend auf einer Soll-Durchflussmenge (TF) von Hydraulikfluid zum Betätigen des hydraulischen Aktuators (26) und basierend auf einer Abweichung (ΔD) einer Ist-Position des angetriebenen Elements (21) von einem Soll-Wert steuert, wobei der zweite Modus ein Modus ist, in dem die Steuerung (11) das Steuerventil (30) durch Durchführen einer zweiten Steuerung steuert, die ein Steuern der Soll-Durchflussmenge (TF) beinhaltet, um niedriger zu sein als wie bei der ersten Steuerung, wenn die Abweichung (ΔD) größer als Null und kleiner als eine vorbestimmte Abweichung (ΔD) ist.

## Revendications

1. Machine de travail (1) comprenant :
un dispositif d'entraînement (8) comportant :
un actionneur hydraulique (26) apte à être actionné par un fluide hydraulique ; et
un élément entraîné (21) apte à être remonté et abaissé par l'actionneur hydraulique (26) ;
une soupape de commande (30) destinée à commander l'actionneur hydraulique (26) ; et
un dispositif de commande (11) configuré ou programmé pour commander la soupape de commande (30) de sorte que l'élément entraîné (21) se déplace vers une position cible ; dans laquelle
le dispositif de commande (11) est configuré ou programmé pour basculer entre un premier mode et un deuxième mode, le premier mode étant un mode dans lequel le dispositif de commande (11) commande la soupape de commande (30) en effectuant une première commande sur la base d'un débit cible (TF) du fluide hydraulique afin d'actionner l'actionneur hydraulique (26) et sur la base d'une déviation (ΔD) d'une position réelle de l'élément entraîné (21) par rapport à une valeur cible, le deuxième mode étant un mode dans lequel le dispositif de commande (11) commande la soupape de commande (30) en effectuant une deuxième commande comportant la régulation du débit cible (TF) de sorte qu'il soit moins élevé que dans la première commande lorsque la déviation (ΔD) est supérieure à zéro et inférieure à une déviation prédéterminée (ΔD) ;
**caractérisée en ce que**
la machine de travail (1) comprend en outre un interrupteur (50) apte à être actionné afin de basculer entre le premier mode et le deuxième mode du dispositif de commande (11) ; et
le dispositif de commande (11) est configuré ou programmé pour basculer entre le premier mode et le deuxième mode en réponse à un actionnement de l'interrupteur (50).

2. Machine de travail (1) selon la revendication 1, dans laquelle le dispositif de commande (11) est configuré ou programmé pour commander la soupape de commande (30) en effectuant la première commande lorsque l'élément entraîné (21) est remonté même lorsque le dispositif de commande (11) se trouve dans le deuxième mode.

3. Machine de travail (1) selon la revendication 1 ou 2, comprenant en outre :
un commutateur manuel (51) destiné à changer un débit maximal (MF) du fluide hydraulique afin d'actionner l'actionneur hydraulique (26) ; dans laquelle
le dispositif de commande (11) est configuré ou programmé pour commander la soupape de commande (30) sur la base du débit maximal (MF) changé via le commutateur manuel (51).

4. Machine de travail (1) selon l'une quelconque des revendications 1 à 3, dans laquelle
le dispositif d'entraînement (8) est un dispositif de levage (8) destiné à remonter et abaisser un dispositif de travail (3) ;
l'actionneur hydraulique (26) est un vérin de levage ; et
l'élément entraîné (21) est un bras de levage apte à être entraîné par actionnement du vérin de levage (26).

5. Machine de travail (1) selon l'une quelconque des revendications 1 à 4, dans laquelle le dispositif de commande (11) est configuré ou programmé pour commander la soupape de commande (30) en effectuant la deuxième commande lorsque l'élément entraîné (21) est abaissé dans un cas où le dispositif de commande (11) se trouve dans le deuxième mode.

6. Procédé de commande d'une machine de travail (1) selon la revendication 1 qui comporte un dispositif d'entraînement (8) comportant un actionneur hydraulique (26) apte à être actionné par un fluide hydraulique et un élément entraîné (21) apte à être remonté et abaissé par l'actionneur hydraulique (26), une soupape de commande (30) destinée à commander l'actionneur hydraulique (26), un dispositif de commande (11) destiné à commander la soupape de commande (30) de sorte que l'élément entraîné (21) se déplace vers une position cible, et un interrupteur (50), le procédé comprenant :
le fait que le dispositif de commande (11), en réponse à un actionnement de l'interrupteur (50), bascule entre un premier mode et un deuxième mode, le premier mode étant un mode dans lequel le dispositif de commande (11) commande la soupape de commande (30) en effectuant une première commande sur la base d'un débit cible (TF) du fluide hydraulique afin d'actionner l'actionneur hydraulique (26) et sur la base d'une déviation (ΔD) d'une position réelle de l'élément entraîné (21) par rapport à une valeur cible, le deuxième mode étant un mode dans lequel le dispositif de commande (11) commande la soupape de commande (30) en effectuant une deuxième commande comportant la régulation du débit cible (TF) de sorte qu'il soit moins élevé que dans la première commande lorsque la déviation (ΔD) est supérieure à zéro et inférieure à une déviation prédéterminée (ΔD).
